(19) Europäisches Patentamt
European Patent Office
Office européen des brevets

(11) Veröffentlichungsnummer: **0 128 345 A2**

(12) # EUROPÄISCHE PATENTANMELDUNG

(21) Anmeldenummer: **84105111.3**

(22) Anmeldetag: **07.05.84**

(51) Int. Cl.³: **C 08 F 8/36**

(30) Priorität: **09.05.83 DE 3316948**

(43) Veröffentlichungstag der Anmeldung: **19.12.84**
**Patentblatt 84/51**

(84) Benannte Vertragsstaaten: **AT BE CH DE FR GB IT LI NL SE**

(71) Anmelder: **HOECHST AKTIENGESELLSCHAFT,**
**Postfach 80 03 20, D-6230 Frankfurt am Main 80 (DE)**

(72) Erfinder: **Zimmermann, Wolfgang, Dr., Im Stückes 48,**
**D-6233 Kelkheim (Taunus) (DE)**
Erfinder: **Eichhorn, Wilfried, Dr., Ziegelheck 1,**
**D-6240 Königstein/Taunus (DE)**

(54) **Verfahren zur Herstellung von in wässrigen Alkalien löslichem Polyvinylalkohol und seine Verwendung.**

(57) Verfahren zur Herstellung von in wäßrigen Alkalien löslichem Polyvinylalkohol durch partielle Acetalisierung eines Polyvinylalkohols (PVAL) mit einem sulfonsäuregruppenhaltigen Aldehyd in wäßrigem Medium, indem man bis zu maximal 10 Mol.-% der Hydroxylgruppen des PVAL, bezogen auf den PVAL, mit einer ($C_3$–$C_7$)-Alkanal-3-sulfonsäure umsetzt und das Umsetzungsprodukt gegebenenfalls mit Basen in wasserlösliche Salze überführt.

Verwendung der so hergestellten und in wäßrigen Alkalien löslichen PVAL-Derivate als Textilschlichtemittel, ferner zur Herstellung von Gießfilmen, Folien, Beschichtungen von Substraten oder als Emulgier- und/oder Dispergiermittel und/oder als Schutzkolloid.

EP 0 128 345 A2

Verfahren zur Herstellung von in wäßrigen Alkalien löslichem Polyvinylalkohol und seine Verwendung

Gegenstand der Erfindung ist ein Verfahren zur Herstellung von in wäßrigen Alkalien löslichem Polyvinylalkohol durch Teilacetalisierung von Polyvinylalkohol mit sulfonsäuregruppenhaltigen Aldehyden in wäßrigem Medium sowie Verwendung der erfindungsgemäß hergestellten Polyvinylalkoholderivate als Schlichtemittel oder zur Herstellung von Gießfilmen, Folien, Beschichtungen von Substraten oder als Emulgier- und/oder Dispergiermittel und/oder als Schutzkolloid.

Für viele Verwendungszwecke von Polyvinylalkohol (=PVAL) ist eine Alkalilöslichkeit des daraus hergestellten Films von großem Vorteil, z.B. können polyvinylalkoholgeschlichtete Rayon-Gewebe bei gegebener Alkalilöslichkeit des Polyvinylalkohols ohne ein vorheriges Auswaschen des Schlichtemittels im alkalischen Färbebad eingefärbt werden. Auch kann das Nachwaschen nach der Entschlichtung von Geweben entfallen, da Schlichtereste beim Bleichen und alkalischen Färben entfernt werden.

Erwünscht ist ferner eine Alkalilöslichkeit von Polyvinylalkoholfilmen auf dem Verpackungssektor, wenn z.B. alkalisch reagierende Waschmittel verpackt werden sollen oder ein neutral reagierendes Verpackungsgut in einem alkalischen Medium gelöst werden soll.

In der DE-PS 947 114 sind bereits wasserlösliche sulfonsäuregruppenhaltige Acetale des Polyvinylalkohols beschrieben, die durch Kondensation von PVAL in wäßriger Lösung mit Aldehydsulfonsäuren unter Zusatz von sauren Kondensationsmitteln, wie Mineralsäuren, erhalten werden können. Als Aldehydsulfonsäure wird z.B. Benzaldehydsulfonsäure

eingesetzt (vgl. DE-PS 643 650). Auch Butyraldehydsulfonsäure kann eingesetzt werden. Diese wird erhalten durch Umsetzung von 1 Mol Crotonaldehyd mit 2 Mol schwefliger Säure in Wasser unter Addition von je 1 Mol $H_2SO_3$ an die Doppelbindung und an die Aldehydgruppe, wobei zunächst Oxybutandisulfonsäure gebildet wird, welche anschließend durch thermolytische Zersetzung unter Abspaltung von 1 Mol $H_2SO_3$ in die Butyraldehydsulfonsäure übergeführt wird. Hierbei tritt leicht Verfärbung auf, was sich beim Einsatz der Aldehydsulfonsäure zur Acetalisierung von Polyvinylalkohol ungünstig auswirkt und zu unbefriedigenden Acetalisierungsprodukten, die u.a. mit Schwefeldioxid verunreinigt sein können, führt.

Aus der DE-PS 947 114 ist ein weiteres Verfahren zur Herstellung von Polyvinylacetalsulfonsäuren bekannt, bei dem man auf den Einsatz der genannten Aldehydsulfonsäuren verzichtet. Statt dessen werden Polyvinylalkohol oder Vinylalkoholgruppen enthaltende Polymerisate in wäßriger Lösung mit ungesättigten Aldehyden in Gegenwart von schwefliger Säure zu Polyvinylacetalsulfonsäuren umgesetzt. Auch dieses Verfahren und die danach hergestellten Produkte besitzen erhebliche Nachteile. So muß in die Reaktionslösung Schwefeldioxid eingeleitet werden. Auch gehen bei den sich ergebenden hohen Acetalisierungsgraden des PVAL dessen wertvolle Filmeigenschaften weitgehend verloren. Hohe Sulfonsäuregruppengehalte führen außerdem zu verstärkter Hygroskopizität der polymeren Acetale, was für zahlreiche Anwendungen nachteilig ist.

Der geschilderten Nachteile wegen konnte den bisher bekannt gewordenen Polyvinylacetalsulfonsäuren trotz ihrer Löslichkeit in wäßrigen Alkalien auf verschiedenen interessanten Einsatzgebieten keine größere technische Bedeutung zukommen, wie z.B. die Verwendung als Schlichtemittel in der Textilindustrie oder als Rohstoff für alkalilösliche Folien, Filme oder Beschichtungen.

Es wurde nun überraschenderweise gefunden, daß man, unter Überwindung der vorstehend beschriebenen Nachteile, ein in wäßrigen Alkalien lösliches Polyvinylalkoholderivat, dessen Filmeigenschaften weitgehend denen des Ausgangs-PVAL entsprechen, sehr vorteilhaft durch Teilacetalisierung des PVAL mit sulfonsäuregruppenhaltigen Aldehyden herstellen kann, indem man den PVAL in wäßrigem Medium, insbesondere vor oder während, oder auch nach dem Auflösen des PVAL in Wasser, mit einer nur geringen Menge, bezogen auf PVAL, des Reaktionsproduktes aus 1 Mol eines 2,3-Alkenals mit 1 Mol schwefliger Säure zur Reaktion bringt, so daß nur sehr geringe bis geringe Anteile der OH-Gruppen des Ausgangs-PVAL acetalisiert werden und das Teilacetalisierungsprodukt, im Gegensatz zum Ausgangs-PVAL, neben seiner Löslichkeit in Wasser auch in wäßrigen Alkalien löslich ist. Dieses Teilacetalisierungsprodukt kann sowohl in seiner sauren Form als auch nach teilweiser oder vollständiger Überführung der sulfonsauren Gruppen in eine wasserlösliche Salzform sehr vorteilhaft für die vorgesehenen Anwendungen eingesetzt werden.

Die erfindungsgemäß erhaltene wäßrige Lösung des PVAL-Derivats wird vorzugsweise unmittelbar oder gegebenenfalls auch nach einer Zwischenlagerung für den vorgesehenen Verwendungszweck eingesetzt, wie z.B. als Schlichtemittel oder zur Herstellung von Gießfilmen, Gießfolien oder Beschichtungen auf Substraten, oder als Emulgier- und/oder Dispergiermittel und/oder als Schutzkolloid in dispersen wäßrigen Systemen. Man kann das PVAL-Derivat auch durch übliche Methoden des Wasserentzugs aus der wäßrigen Lösung isolieren, wie z.B. durch Fällungsmittelzusatz, Sprühtrocknung, Gefriertrocknung oder mittels eines Dünnschichtverdampfers.

Gegenstand der Erfindung ist daher ein Verfahren zur Herstellung von in wäßrigen Alkalien löslichem Polyvinylalkohol durch Acetalisierung eines Polyvinylalkohols (PVAL) mit einem sulfonsäuregruppenhaltigen Aldehyd in wäßrigem

Medium, dadurch gekennzeichnet, daß man bis zu maximal 10 Mol-% der Hydroxylgruppen des PVAL, bezogen auf den PVAL, insbesondere vor oder während, oder auch nach dem Auflösen des PVAL in Wasser, mit einer Verbindung der Formel I,

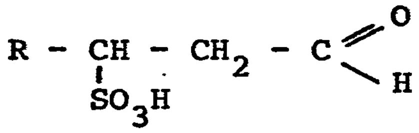

(I)

worin R= H oder $(C_1 - C_4)$-Alkyl bedeutet, umsetzt und das Umsetzungsprodukt gegebenenfalls durch Basenzusatz auf pH 4 bis 7 einstellt.

Vorzugsweise werden 0,05 bis 8 Mol-%, insbesondere 0,08 bis 5,0 Mol-% der Hydroxylgruppen des PVAL erfindungsgemäß acetalysiert.

Die erfindungsgemäße Umsetzung erfolgt vorzugsweise zu Beginn oder während der Herstellung der wäßrigen Lösung des Ausgangs-PVAL, vorzugsweise bei der für den Lösevorgang gegebenenfalls ohnehin angewandten erhöhten Temperatur.

Gegenstand der Erfindung sind weiterhin die nach dem Verfahren der Erfindung hergestellten sulfonsäuregruppenhaltigen Polyvinylalkoholpartialacetale und deren Salze. Bevorzugte Salze sind die wasserlöslichen Salze, vorzugsweise Alkali-, Ammonium- und Aminsalze.

Die zur Acetalisierung verwendete Verbindung der Formel I kann in bekannter Weise durch Umsetzung von 1 Mol eines $(C_3 - C_7)$-2,3-Alkenals mit 1 Mol schwefliger Säure bzw. wäßrigem Schwefeldioxid in wäßriger Phase gemäß folgendem Reaktionsschema erhalten werden:

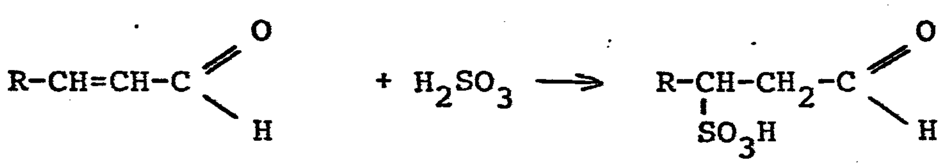

(I)

(R= H oder $(C_1-C_4)$-Alkyl).

Bevorzugt ist die aus Crotonaldehyd erhältliche Butyraldehyd-3-sulfonsäure der Formel I mit R= Methyl. Ebenfalls vorteilhafte Resultate können mit der aus Acrolein erhältlichen Propionaldehyd-3-sulfonsäure der Formel I mit R= H erhalten werden.

Die Herstellung der Verbindungen der Formel I kann z.B. durch Einleiten einer stöchiometrischen Menge von $SO_2$-Gas in eine verdünnte wäßrige Lösung eines 2,3-Alkenals, oder durch Vermischen des 2,3-Alkenals mit der stöchiometrischen Menge einer gesättigten wäßrigen Schwefeldioxidgaslösung erfolgen, wobei die Verbindung der Formel I in wäßriger Lösung erhalten wird, die als solche erfindungsgemäß eingesetzt werden kann.

Die Verbindung der Formel I kann auch unmittelbar im Acetalisierungsansatz hergestellt werden, indem man der wäßrigen PVAL-Lösung oder dem PVAL-Wasser-Gemisch beim Lösevorgang die gewünschte Menge 2,3-Alkenal zusetzt und anschließend eine äquimolare Menge $SO_2$-Gas, bezogen auf das 2,3-Alkenal, einleitet oder als Schwefeldioxidwasser zumischt.

Die erfindungsgemäße Umsetzung der Verbindung der Formel I mit einem Teil der OH-Gruppen des PVAL in wäßriger Lösung kann durch folgendes Reaktionsschema verdeutlicht werden:

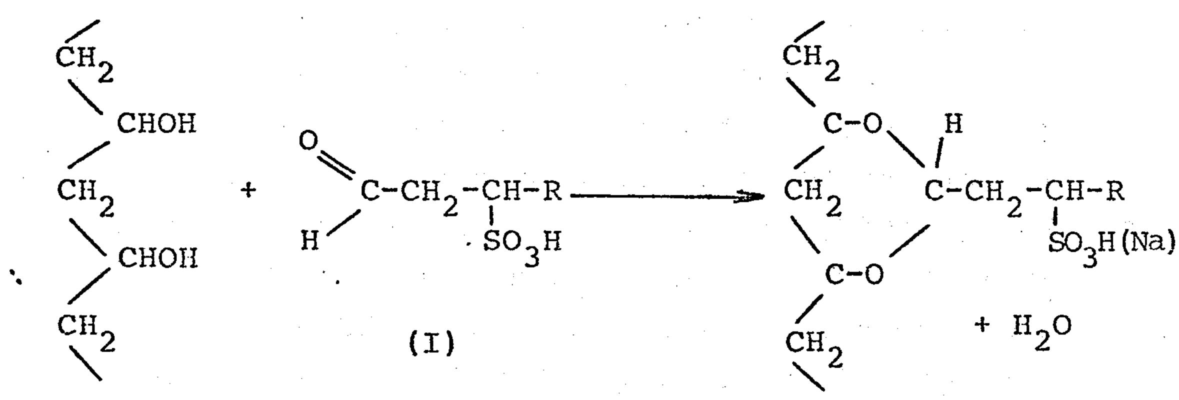

(I)

Wie das Reaktionsschema zeigt, wird für eine zu acetalisierende OH-Gruppe des Polyvinylalkohols 1/2 Mol Verbindung der Formel I benötigt. Ein Acetalisierungskatalysator wird nicht benötigt.

Der stark saure Charakter des 3-Sulfonsäure-alkanals der Formel I und die hohe Stabilität des mit Polyvinylalkohol entstehenden 6-Ring-Acetals lassen die erfindungsgemäße partielle Acetalisierung des Polyvinylalkohols selbst in verdünnter wäßriger Lösung ohne Hinzufügen eines weiteren Katalysators mit praktisch 100 %iger Ausbeute erfolgen.

Gegenstand der Erfindung ist daher ferner die Verwendung von Verbindungen der Formel I zur Herstellung von in wäßrigen Alkalien löslichem teilacetalisiertem Polyvinylalkohol.

Das erfindungsgemäße Verfahren wird vorzugsweise bei Temperaturen zwischen 20 und 95°C durchgeführt. Es ist praktisch mit allen handelsüblichen Polyvinylalkoholtypen durchführbar, z.B. solchen mit Esterzahlen von 0 bis 450 mg KOH/g, vorzugsweise 2 bis 300 mg KOH/g, und Viskositäten zwischen 2 und 200 mPa.s, vorzugsweise 4 bis 40 mPa.s, gemessen in 4 %iger wäßriger Lösung.

Bevorzugt liegt die Reaktionstemperatur zwischen 40 und 95°C. Dies ist ein Bereich, der bei der Auflösung von Polyvinylalkohol in Wasser im allgemeinen ohnehin durchschritten werden muß. Die Reaktionszeit kann bei Vorlegen der Verbindung der Formel I vor dem Auflösen des PVAL in Wasser gleich der Lösezeit des PVAL von 15 bis 300 Minuten (einschließlich der Abkühlzeit) betragen. Bei Zugabe nach oder während des Lösevorganges, vorzugsweise in der Abkühlphase der Lösung bei Temperaturen zwischen 95 und 40°C, kann die Reaktionszeit zwischen 30 Minuten (bei 90 - 95°C) und 5 Stunden (bei 40°C) betragen. Wird die Verbindung der Formel I der PVAL-Lösung nach ihrer Fertigstellung nachträglich bei Raumtemperatur (20°C) beigemischt, so werden für die Reaktion mit dem PVAL etwa 8 Stunden bis zu mehreren Tagen benötigt, wozu eine eventuelle Lagerungszeit der Lösung ausgenutzt werden kann.

Das erfindungsgemäße Verfahren kann auch so durchgeführt werden, daß man die erforderliche Menge an Verbindung der Formel I vor, während oder nach erfolgter Auflösung des PVAL in Wasser unmittelbar im Lösegefäß erzeugt, indem man zunächst die vorgesehene Menge an 2,3-Alkenal und dann die darauf bezogene stöchiometrische Menge schweflige Säure, vorzugsweise als gesättigte Schwefeldioxid-Lösung, zusetzt.

Nach erfolgter Reaktion können die über Acetalbrücken an die Kettenmoleküle des PVAL gebundenen Sulfonsäuregruppen partiell oder vollständig neutralisiert werden. Die Neutralisation erfolgt vorzugsweise mit Alkali-, Ammonium- oder Aminbasen, wobei wasserlösliche Salze erhalten werden. Bevorzugt sind die Natrium-, Kalium-, Ammonium- und Triäthanolaminsalze.

Die erfindungsgemäß erhaltene wäßrige Lösung von mit sulfonsäuregruppenhaltigen Aldehyden teilacetalisiertem PVAL kann, gegebenenfalls nach Einstellung auf pH 4 bis 7, z.B. auf einer Gießfilmmaschine über ein Rakel direkt zum Film vergossen, oder in einem Textilschlichtebad zum Schlichten von Textilfasern, oder in einem Tauchbad oder durch Aufsprühen zum Beschichten von Gegenständen oder Substraten eingesetzt werden, wobei der Wasserentzug durch Trocknen der aufgebrachten Lösung erfolgt.
Das erfindungsgemäße PVAL-Derivat kann aus der wäßrigen Lösung durch Wasserentzug auch in Pulver- oder Granulatform oder als Filmschnitzel isoliert werden, z.B. durch Sprühtrocknung oder durch Ausfällen oder auf einem Dünnschichtverdampfer.

Trotz der nur geringen Mengen an Sulfonsäuregruppen in den erfindungsgemäß teilacetalisierten PVAL-Derivaten sind diese, im Gegensatz zum Ausgangs-PVAL, hervorragend in wäßrigen Alkalien löslich. Andererseits besitzen aber daraus hergestellte Filme, Überzüge und Beschichtungen über-

raschenderweise noch weitgehend die dem Ausgangs-PVAL eigenen charakteristischen mechanischen Eigenschaftsmerkmale.

Die erfindungsgemäß hergestellten PVAL-Derivate können ferner mit Vorteil als Emulgatoren oder Schutzkolloide, z.B. in Wasch- und Reinigungsmitteln sowie zur Dispersionsherstellung eingesetzt werden.

In den nachstehenden Beispielen werden u.a. wichtige Löslichkeitsmerkmale von jeweils ca. 150 µm dicken Gießfilmen aus erfindungsgemäßen PVAL-Derivaten in ihrer mit Natronlauge neutralisierten oder in der sauren nichtneutralisierten Form mit den entsprechenden Löslichkeitsmerkmalen gleich dicker Gießfilme aus unverändertem Ausgangs-PVAL verglichen.

<u>Beispiel 1</u>

<u>Herstellung von Verbindungen der Formel I</u>

A. Butanal-3-sulfonsäure.

1) 70,1 g (1 Mol) Crotonaldehyd wurden mit 1500 g Wasser vermischt und in die entstandene Lösung 64,1 g (1 Mol) Schwefeldioxidgas bei Zimmertemperatur eingeleitet. Aus der Gewichtsabnahme der Schwefeldioxidbombe bzw. der Gewichtszunahme der Mischung konnte der Endpunkt der Reaktion ermittelt werden.
Die fertige Reaktionslösung enthielt gemäß Titration mit 0,1 N Natronlauge gegen Phenolphthalein 9 Gew.-% Butanal-3-sulfonsäure.

2) Weitere Herstellmethode für Butanal-3-sulfonsäure:

Vorgelegt wurden 364 g mit Schwefeldioxidgas bei Zimmertemperatur gesättigtes Wasser, welches 0,0176 g Schwefeldioxid pro g enthielt. Dieses Schwefeldioxidwasser wurde vermischt mit 7 g Crotonaldehyd.

Nach 1 Stunde wurde das Reaktionsgemisch mit 0,1 N Natronlauge gegen Phenolphthalein titriert. Es enthielt 9 Gew.-% Butanal-3-sulfonsäure.

B. Propanal-3-sulfonsäure.
364 g Schwefeldioxidwasser, enthaltend 0,0176 g Schwefeldioxid pro g, (0,1 Mol) wurden versetzt mit 5,6 g Acrolein (0,1 Mol). Nach 1 Stunde wurde die Reaktionsmischung mit 0,1 N Natronlauge gegen Phenolphthalein titriert. Sie enthielt 3,8 Gew.-% Propanal-3-sulfonsäure.

Beispiel 2

100 g eines Polyvinylalkohols mit den Kenndaten: Viskosität der 4 %igen wäßrigen Lösung 18 mPa.s, Esterzahl 140 mg KOH/g, wurden gelöst in 900 g Wasser. Als Lösegefäß wurde ein indirekt beheizbarer Glaskolben mit Rührer verwendet, in welchen unter Rühren der Polyvinylalkohol in das vorgelegte Wasser eingerührt wurde. Die Mischung wurde im Wasserbad auf 95°C unter Rühren erwärmt, wobei sich der Polyvinylalkohol vollständig auflöste.

Während der Abkühlphase wurden in die Lösung bei 80°C 27 g 9 gew.-%ige Butanal-3-sulfonsäurelösung, hergestellt nach Beispiel 1/A1, homogen eingerührt. Die Lösung wurde nach Abkühlen auf Raumtemperatur mit 1 N Natronlauge auf pH 7 neutralisiert, auf eine plane Oberfläche gegossen und zu einem Film von 150 µm Dicke luftgetrocknet.

Vergleichsweise dazu wurde ein 150 µm dicker Gießfilm aus einer wäßrigen Lösung des oben definierten Ausgangs-Polyvinylalkohols, welcher nicht mit der Reaktionslösung behandelt wurde, hergestellt.

Beide Filme wurden in ca. 1 cm breiten Streifen in ein Bad von 60°C warmer 6 gew.-%iger wäßriger Natronlauge getaucht. Ohne zusätzliches Rühren löste sich der erfindungsgemäß hergestellte Film in 90 sek. vollständig auf, während der Vergleichsfilm aus unbehandeltem Polyvinylalkohol unter

gleichen Bedingungen lediglich etwas quoll, jedoch sich auch nach Stunden nicht auflöste.

Beispiel 3

In der in Beispiel 2 beschriebenen Löseapparatur wurden 100 g 10 gew.-%ige Polyvinylalkohollösung hergestellt, wobei die Kenndaten des Polyvinylalkohols die gleichen waren wie in Beispiel 2. Während des Lösevorgangs in der Aufheizperiode bei 80°C wurden der Lösung 13,5 g der in Beispiel 1/A1 beschriebenen 9 gew.-%igen Butanal-3-sulfonsäurelösung hinzugefügt.

Nach Abkühlung der Lösung auf Raumtemperatur wurde der Ansatz geteilt und die eine Hälfte mit 1 N Natronlauge neutralisiert.

Zur Bestimmung der Alkalilöslichkeit wurden 3 Vergleichsgießfilme von je 150 µm Dicke hergestellt:

a) aus mit Natronlauge neutralisiertem Ansatz,
b) aus nicht neutralisiertem Ansatz,
c) aus einer wäßrigen Lösung von unbehandeltem Ausgangs-PVAL.

Die drei Folienstreifen wurden bei 60°C in 6 gew.-%ige wäßrige Natronlauge gehängt und ohne Rühren die Lösezeiten beobachtet. Diese betrugen für den Film aus a)= 100 sek. und für den Film aus b)= 120 sek., während der Film aus c) auch nach Stunden ungelöst blieb.

Beispiel 4

In der in Beispiel 2 beschriebenen Apparatur wurden 270 g Wasser vorgelegt und mit 16,2 g der in Beispiel 1/A2 beschriebenen 9 gew.-%igen Butanal-3-sulfonsäurelösung vermischt. In diese Lösung wurden bei Raumtemperatur 30 g eines Polyvinylalkohols eingetragen, der folgende Kenndaten besaß: Viskosität der 4 %igen wäßrigen Lösung 66 mPa.s, Esterzahl 5 mg KOH/g. Die Suspension wurde unter Rühren auf

95°C Innentemperatur erwärmt, wobei vollständige Lösung des Polyvinylalkohols erfolgte bei gleichzeitiger Umsetzung mit der hinzugefügten Butanal-3-sulfonsäure. Nach Abkühlung der Reaktionslösung wurde diese geteilt und die eine Hälfte mit 1 N Natronlauge neutralisiert.
Es wurden 3 Filme von je 150 µm Dicke gegossen:

a) aus der mit Natronlauge neutralisierten Lösung,
b) aus der nicht neutralisierten Lösung,
c) aus einer wäßrigen Lösung von unbehandeltem Ausgangs-PVAL.

Streifen von ca. 1 cm Breite wurden in Bäder von 60°C warmer 6 %iger wäßriger Natronlauge getaucht und der Lösevorgang beobachtet. Der Film aus a) war nach 600 sek. gelöst, der Film aus b) war nach 500 sek. gelöst und der Film aus c) war unter diesen Bedingungen völlig unlöslich.

Beispiel 5

In einem Vorratsgefäß aus Glas wurden 100 g einer 20 gew.-%igen Polyvinylalkohollösung hergestellt, deren PVAL-Anteil folgenden Kenndaten entsprach: Viskosität der 4 %igen wäßrigen Lösung 4 mPa.s, Esterzahl 140 mg KOH/g.
Diese Lösung wurde bei Raumtemperatur mit 5 g einer nach Beispiel 1/A2 aus Schwefeldioxid und Crotonaldehyd hergestellten 5,5 gew.-%igen Butanal-3-sulfonsäurelösung homogen vermischt.

Das homogene Gemisch wurde 4 Tage bei 20°C gelagert, danach in zwei gleiche Teile geteilt: Lösung a) und Lösung b).
Lösung a) wurde mit Natronlauge neutralisiert und zu einem Film von ca. 150 µm Dicke vergossen. Lösung b) wurde in nicht neutralisiertem Zustand ebenfalls zu einem ca. 150 µm dicken Film vergossen. Ein weiterer Film c) von ca. 150 µm Dicke wurde aus einer wäßrigen Lösung von unbehandeltem Ausgangs-PVAL gegossen.

Nach Lufttrocknung der Filme wurden diese in 6 %ige wäßrige Natronlauge von 60°C getaucht und die Lösezeiten beobachtet.

Die Lösezeiten der Filme a) und b) betrugen jeweils 350 sek., während der Film aus c) lediglich quoll, jedoch nicht in Lösung ging.

Beispiel 6

In der im Beispiel 2 beschriebenen Versuchsapparatur wurden 100 g einer 10 gew.-%igen wäßrigen Polyvinylalkohollösung hergestellt. Kenndaten des Polyvinylalkohols: Viskosität der 4 %igen wäßrigen Lösung 20 mPa.s, Esterzahl 20 mg KOH/g. Während des Lösevorganges, d.h. beim Aufheizen des Polyvinylalkohol-Wasser-Gemisches auf ca. 95°C Innentemperatur unter Rühren wurden dem Gemisch bei ca. 50°C 1,7 g einer nach Beispiel 1/A1 hergestellten 42 gew.-%igen Butanal-3-sulfonsäurelösung zugesetzt.

Ein Teil der Lösung wurde nach Abkühlung auf Raumtemperatur mit 6 %iger Natronlauge auf pH 5 eingestellt. Sowohl von der neutralisierten Lösung a) als auch von der nicht neutralisierten Lösung b) wurden ca. 150 µm dicke Filme gegossen und luftgetrocknet. Ein weiterer Film c) von ca. 150 µm Dicke wurde aus einer Lösung von unbehandeltem Ausgangs-PVAL gegossen.
Die Filme zeigten beim Eintauchen in eine 6 %ige wäßrige Natronlauge von 60°C folgende Lösezeiten: Film aus a): 45 sek., Film aus b): 120 sek., Film aus c): völlig unlöslich.

Beispiel 7

In der im Beispiel 2 beschriebenen Apparatur wurden 20 g eines Polyvinylalkohols (Kenndaten: Viskosität der 4 %igen wäßrigen Lösung 3 mPa.s, Esterzahl 140 mg KOH/g) in 80 g Wasser gelöst. Während der Abkühlphase wurden der Lösung bei 50°C 7,3 g einer nach Beispiel 1/B hergestellten 3,8 gew.-%igen wäßrigen Propanal-3-sulfonsäurelösung zugesetzt.

Nachdem das Gemisch noch ca. 2 Stunden bis auf Raumtemperatur unter Rühren abgekühlt wurde, wurde die Hälfte der Lösung mit Natronlauge neutralisiert, und es wurden von beiden Anteilen Filme von ca. 150 µm Dicke gegossen.

Während sich ein entsprechender luftgetrockneter und 150 µm dicker Film aus unbehandeltem Ausgangs-PVAL in 6 %iger wäßriger Natronlauge von 60°C nicht auflöste, sondern lediglich quoll, lösten sich die beiden Filme aus dem mit Propanal-3-sulfonsäure behandelten Polyvinylalkohol bereits nach ca. 100 sek. in kalter 6 %iger Natronlauge ohne Rühren vollständig auf.

PATENTANSPRÜCHE:

1. Verfahren zur Herstellung von in wäßrigen Alkalien löslichem Polyvinylalkohol durch Acetalisierung eines Polyvinylalkohols (PVAL) mit einem sulfonsäuregruppenhaltigen Aldehyd in wäßrigem Medium, dadurch gekennzeichnet, daß man bis zu maximal 10 Mol-% der Hydroxylgruppen des PVAL, bezogen auf den PVAL, mit einer Verbindung der Formel I,

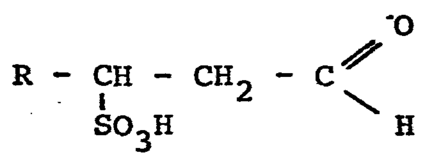 (I)

worin R= H oder $(C_1 - C_4)$-Alkyl bedeutet, umsetzt und das Umsetzungsprodukt gegebenenfalls durch Basenzusatz auf pH 4 bis 7 einstellt.

2. Verfahren nach Anspruch 1, dadurch gekennzeichnet, daß man 0,05 bis 8 Mol-% der Hydroxylgruppen des PVAL mit einer Verbindung der Formel I umsetzt.

3. Verfahren nach Anspruch 1, dadurch gekennzeichnet, daß man 0,08 bis 5,0 Mol-% der Hydroxylgruppen des PVAL mit einer Verbindung der Formel I umsetzt.

4. Verfahren nach Anspruch 1, dadurch gekennzeichnet, daß man die Verbindung der Formel I vor, während oder nach erfolgter Auflösung des PVAL in Wasser unmittelbar im Lösegefäß durch Zusatz äquimolarer Mengen eines $(C_3 - C_7)$-2,3-Alkenals und schwefliger Säure $(H_2SO_3)$ oder Schwefeldioxidwasser erzeugt und die Umsetzung bei der für den Lösevorgang gegebenenfalls angewandten erhöhten Temperatur durchführt.

5. Verfahren nach Anspruch 1, dadurch gekennzeichnet, daß man die Umsetzung bei Temperaturen zwischen 20°C und 95°C durchführt.

6. Verfahren nach Anspruch 1, dadurch gekennzeichnet, daß man das Umsetzungsprodukt in das Natrium-, Kalium-, Ammonium- oder Triäthanolaminsalz überführt.

7. Verfahren nach Anspruch 1, dadurch gekennzeichnet, daß der Ausgangspolyvinylalkohol eine Viskosität zwischen 2 und 200 mPa.s, gemessen in 4 %iger wäßriger Lösung, und eine Esterzahl von 0 bis 450 mg KOH/g aufweist.

8. In wäßrigen Alkalien lösliche sulfonsäuregruppenhaltige Polyvinylalkoholpartialacetale und deren wasserlösliche Salze, hergestellt nach einem der Ansprüche 1, 2, 3, 4, 5, 6 oder 7.

9. Verwendung der Verbindung der Formel I nach Anspruch 1 oder 4 zur Herstellung von in wäßrigen Alkalien löslichem teilacetalisiertem Polyvinylalkohol.

10. Verwendung der Verbindungen nach Anspruch 8 als Textilschlichtemittel oder zur Herstellung von Gießfilmen, Gießfolien, Beschichtungen auf Substraten, oder als Emulgier- und/oder Dispergiermittel und/oder als Schutzkolloid in dispersen wäßrigen Systemen.

0128345
HOE 83/F 080

PATENTANSPRÜCHE Österreich:

1. Verfahren zur Herstellung von in wäßrigen Alkalien löslichem Polyvinylalkohol durch Acetalisierung eines Polyvinylalkohols (PVAL) mit einem sulfonsäuregruppenhaltigen Aldehyd in wäßrigem Medium, dadurch gekennzeichnet, daß man bis zu maximal 10 Mol-% der Hydroxylgruppen des PVAL, bezogen auf den PVAL, mit einer Verbindung der Formel I,

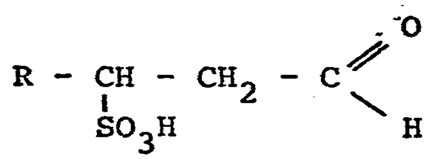 (I)

worin R= H oder $(C_1 - C_4)$-Alkyl bedeutet, umsetzt und das Umsetzungsprodukt gegebenenfalls durch Basenzusatz auf pH 4 bis 7 einstellt.

2. Verfahren nach Anspruch 1, dadurch gekennzeichnet, daß man 0,05 bis 8 Mol-% der Hydroxylgruppen des PVAL mit einer Verbindung der Formel I umsetzt.

3. Verfahren nach Anspruch 1, dadurch gekennzeichnet, daß man 0,08 bis 5,0 Mol-% der Hydroxylgruppen des PVAL mit einer Verbindung der Formel I umsetzt.

4. Verfahren nach Anspruch 1, dadurch gekennzeichnet, daß man die Verbindung der Formel I vor, während oder nach erfolgter Auflösung des PVAL in Wasser unmittelbar im Lösegefäß durch Zusatz äquimolarer Mengen eines $(C_3 - C_7)$-2,3-Alkenals und schwefliger Säure $(H_2SO_3)$ oder Schwefeldioxidwasser erzeugt und die Umsetzung bei der für den Lösevorgang gegebenenfalls angewandten erhöhten Temperatur durchführt.

5. Verfahren nach Anspruch 1, dadurch gekennzeichnet, daß man die Umsetzung bei Temperaturen zwischen 20°C und 95°C durchführt.

6. Verfahren nach Anspruch 1, dadurch gekennzeichnet, daß man das Umsetzungsprodukt in das Natrium-, Kalium-, Ammonium- oder Triäthanolaminsalz überführt.

7. Verfahren nach Anspruch 1, dadurch gekennzeichnet, daß der Ausgangspolyvinylalkohol eine Viskosität zwischen 2 und 200 mPa.s, gemessen in 4 %iger wäßriger Lösung, und eine Esterzahl von 0 bis 450 mg KOH/g aufweist.

8. Verwendung der Verbindung der Formel I nach Anspruch 1 oder hergestellt nach Anspruch 4 zur Herstellung von in wäßrigen Alkalien löslichem teilacetalisiertem Polyvinylalkohol.

9. Verwendung der Verbindungen, hergestellt nach einem der Ansprüche 1 bis 7, als Textilschlichtemittel oder zur Herstellung von Gießfilmen, Gießfolien, Beschichtungen auf Substraten, oder als Emulgier- und/oder Dispergiermittel und/oder als Schutzkolloid in dispersen wäßrigen Systemen.